# EUROPÄISCHE PATENTANMELDUNG

(11) **EP 1 615 307 A1**
(43) Veröffentlichungstag der Anmeldung: **11.01.2006**
(21) Anmeldenummer: 04015889.1
(22) Anmeldetag: 06.07.2004
(51) Int. Cl.: H02B 1/052

(54) **Halter zur Befestigung eines Gehäuses an einer Schiene, und Gehäuse oder elektrisches Gerät mit einem Halter**

(71) Anmelder: Puls Elektronische Stromversorgungs GmbH, 81925 München (DE)
(72) Erfinder: Raspotnig, Michael, 81825 München (DE)
(74) Vertreter: HOFFMANN EITLE

(57) **Zusammenfassung**

Ein Halter (12) zur Befestigung eines Gehäuses an einer Schiene (10) ist an dem Gehäuse befestigbar und weist eine Ausnehmung (16), die mit einem Vorsprung (18) der Schiene (10) in Eingriff bringbar ist, und ein elastisches Element (22) auf, das, im Querschnitt gesehen, zumindest einen geschlossenen Bereich (28) und zumindest einen Arm (30) aufweist.

## Beschreibung

### Technisches Gebiet

Die Erfindung betrifft einen Halter zur Befestigung eines Gehäuses an einer Schiene sowie ein Gehäuse oder elektrisches Gerät mit einem derartigen Halter.

Insbesondere auf dem Gebiet der elektrischen Einrichtungen besteht häufig die Notwendigkeit, elektrische Geräte, wie z.B. Netzgeräte, an Schienen zu befestigen. Die Schienen können beispielsweise einen hutförmigen Querschnitt aufweisen und werden dementsprechend als Hutschienen bezeichnet. Im Hinblick auf die Befestigung der Gehäuse derartiger Geräte an Schienen bestehen verschiedenste Anforderungen. Zum Einen wird angestrebt, das Gehäuse an der Schiene abnehmbar anzubringen. Zum Anderen ist zu verhindern, dass sich das Gehäuse unbeabsichtigt von der Schiene löst oder abgenommen werden kann. Schließlich treten Fälle auf, in denen die Befestigung des Gehäuses an der Schiene derart vorzusehen ist, dass eine Stromleitung zwischen den Komponenten möglich ist.

### Stand der Technik

Die FR 2 694 846 offenbart ein Befestigungssystem zur Befestigung elektrischer Geräte an Schienen, das ein nachgiebiges Element aufweist. Beim Anbringen eines Geräts oder Gehäuses mittels des beschriebenen Systems wird das nachgiebige Element kurzzeitig verformt und kehrt dann in seine ursprüngliche Form zurück. Das Lösen oder Abnehmen des Geräts ist dementsprechend nur möglich, wenn die elastische Kraft des nachgiebigen Elements überwunden wird.

Aus der EP 0 703 640 A1 geht eine schraubenlose Klemme hervor, die ein nachgiebiges Element mit einem ersten und einem zweiten Schenkel aufweist. Zwischen den Schenkeln wird eine Klemmkraft übertragen.

Schließlich betrifft die EP 1 189 320 A2 der Anmelderin einen Halter zur Befestigung eines Gehäuses an einer Schiene, der eine Ausnehmung und ein elastisches Element mit einem geschlossenen Querschnitt aufweist. Bei dem Befestigungsvorgang wird ein Vorsprung der Schiene in die Ausnehmung gebracht, und das Gehäuse wird nachfolgend um diesen Eingriffspunkt herum in Richtung der Schiene geschwenkt. Im Rahmen dieser Bewegung kommt das nachgiebige Element mit der Schiene in Berührung und wird verformt. Im angebrachten Zustand bleibt das nachgiebige Element in seinem verformten Zustand und sorgt für die Ausübung einer Klemmkraft.

### Darstellung der Erfindung

Der vorliegenden Erfindung liegt die Aufgabe zugrunde, einen Halter zur Befestigung eines Gehäuses weiter zu verbessern.

Die Lösung dieser Aufgabe erfolgt durch den Halter gemäß Anspruch 1.

Demzufolge ist der erfindungsgemäße Halter zur Befestigung eines Gehäuses an einer Schiene an dem Gehäuse befestigbar und weist eine Ausnehmung auf, die mit einem Vorsprung der Schiene in Eingriff bringbar ist. Ferner ist ein elastisches Element vorgesehen. Im Hinblick auf die vorangehend genannten Merkmale stimmt der neue Halter mit demjenigen der EP 1 189 320 A2 überein, und die Wirkungsweise beim Befestigen des Gehäuses und die grundsätzliche Aufbringung der Klemmkraft ist unverändert, sodass diesbezüglich auf die Offenbarung der genannten Schrift verwiesen werden kann, die durch die Bezugnahme zum Gegenstand der vorliegenden Anmeldung gemacht wird.

Das elastische Element ist jedoch dahingehend verändert, dass es, im Querschnitt gesehen, zumindest einen geschlossenen Bereich und zumindest einen Arm aufweist. Durch diese Gestaltung wurde eine Querschnittsform des elastischen Elements erreicht, die für verbesserte Eigenschaften des elastischen Elements und des Halters insgesamt sorgt. Durch das Vorsehen des geschlossenen Bereichs und, getrennt davon, des Arms können unterschiedliche Funktionen voneinander getrennt werden. Durch den geschlossenen Bereich wird im Rahmen des Befestigungsvorganges eine definierte, elastische Verformung erzeugt, die im befestigten Zustand des Gehäuses ausgebildet bleibt und für die Aufbringung einer Klemmkraft sorgt. Bei dem neuartigen Halter erfolgt jedoch die Befestigung des elastischen Elements selbst an dem Halter nicht oder zumindest nicht ausschließlich mittels des, im Querschnitt gesehen, geschlossenen Bereichs. Vielmehr ist zusätzlich ein Arm vorgesehen, der dementsprechend die zusätzliche Funktion, nämlich die Befestigung des elastischen Elements an dem Halter, übernimmt.

Bei Versuchen hat sich insbesondere herausgestellt, dass das elastische Element und damit der Halter insgesamt hinsichtlich ihrer Breite deutlich verringert werden können, und immer noch die notwendige Klemmkraft erzeugt werden kann. Dieser Effekt beruht auf der neuartigen Form des elastischen Elements und kann beispielsweise zu einer Reduzierung der Breite des Halters von 12 auf 7 mm führen. Ferner befindet sich in vorteilhafter Weise das elastische Element in der Nähe derjenigen Ausnehmung des Halters, mit der ein Vorsprung an der Schiene in Eingriff zu bringen ist. In der Praxis steht die Schiene üblicherweise fest, und das Gehäuse wird daran eingehakt und in den befestigten Zustand gebracht. Die neuartige Form des elastischen Elements ist auch für diese Einhak- oder Einführbewegung in die Schiene günstiger. Somit werden die Arbeiten im Rahmen der Befestigung eines Gehäuses, das mit dem erfindungsgemäßen Halter ausgestattet ist, an einer Schiene vereinfacht. Es ist ferner festzustellen, dass das neuartig gestaltete elastische Element für unterschiedliche Querschnittsformen der Schienen toleranter ist. Durch die "langgezogene" Form mit einem geschlossenen Bereich und einem Arm wird ein größerer Bereich geschaffen, innerhalb dessen die erforderliche Klemmkraft erzeugt werden kann. Somit eignet sich der erfindungsgemäße Halter in vorteilhafter Weise für Schienen, die sich hinsichtlich ihrer Querschnittsform deutlich voneinander unterscheiden. Das Einsatzgebiet des erfindungsgemäßen Halters wird somit signifikant erweitert. Ferner kann eine Vereinheitlichung des Halters für die Befestigung an unterschiedlichen Schienen erreicht werden, was zu wirtschaftlichen Vorteilen führt.

Bevorzugte Weiterbildungen des Halters sind in den weitern Ansprüchen beschrieben.

Wenngleich der Arm grundsätzlich an einer beliebigen Stelle des elastischen Elements ausgebildet sein kann, wird derzeit bevorzugt, dass dieser an einem Ende des elastischen Elements vorgesehen ist. Hierdurch kann in besonders einfacher und effizienter Weise die vorrangige Funktion des Armes, nämlich die Befestigung des elastischen Elements an dem Halter, realisiert werden.

Für diese Befestigung ist es vorteilhaft, wenn der Arm mit zumindest einer zweiten, in dem Halter ausgebildeten Ausnehmung in Eingriff steht. Durch eine derartige Kombination kann in einfacher Weise die Anbringung des elastischen Elements an dem Halter ausgebildet werden.

Für eine besonders zuverlässige Befestigung des elastischen Elements hat sich die Ausbildung zumindest einer Verdickung an dem Arm, insbesondere an dessen Ende als vorteilhaft erwiesen.

Es wird ferner bevorzugt, wenn sich der Arm, im befestigten Zustand des Gehäuses betrachtet, von der Schiene weg erstreckt. Hierdurch kann der Arm ergänzend so verwendet werden, dass er die durch den geschlossenen Bereich aufgebrachte Klemmkraft verstärkt, und somit insgesamt für eine verbesserte Befestigung sorgt.

Insbesondere hat es sich als vorteilhaft erwiesen, die Lagebeziehung zwischen dem Halter und der Schiene derart vorzusehen, dass, im befestigten Zustand des Gehäuses betrachtet, das elastische Element im Bereich des Übergangs zwischen dem geschlossenen Bereich und dem Arm mit der Schiene in Berührung steht. Dieser Übergang bildet einen vergleichsweise großen Bereich, in dem die Schiene, insbesondere unterschiedliche Schienen mit unterschiedlichen Querschnittsformen, mit dem elastischen Element in Berührung stehen kann, und stets die erwünschte Klemmkraft erzeugt werden kann. Insofern sorgt diese bevorzugte Ausführungsform für eine besondere Flexibilität.

Dies gilt ebenso für diejenige bevorzugte Ausführungsform, bei welcher der geschlossene Bereich im Querschnitt gesehen länglich ausgebildet ist.

In diesem Zusammenhang wird ferner bevorzugt, dass der geschlossene Bereich eine über seine Länge veränderte Höhe aufweist. Es sei darauf hingewiesen, dass diese Betrachtungen sich stets auf den Querschnitt des elastischen Elements und des geschlossenen Bereich desselben beziehen. Im Querschnitt gesehen gestaltet sich dementsprechend der geschlossene Bereich bevorzugt länglich und weist eine veränderliche Höhe auf. Insbesondere kann dieser hinsichtlich seiner Höhe kontinuierlich ansteigen, und an einem Ende höher sein als an dem anderen Ende. Besonders bevorzugt wird in diesem Zusammenhang, die größere Höhe an demjenigen Ende vorzusehen, an dem sich an dem elastischen Element der Arm an den geschlossenen Bereich anschließt.

Für die Aufbringung der Klemmkraft, und insbesondere die Flexibilität hinsichtlich der Querschnittsform der Schiene hat es sich ferner als günstig erwiesen, wenn das elastische Element eine zu der Schiene gerichtete Wölbung aufweist.

Für die Befestigung des elastischen Elements an dem Halter sowie die Aufbringung der Klemmkraft bei dem Befestigungsvorgang, bei dem das Gehäuse einschließlich des Halters und des elastischen Elements in Richtung der Schiene bewegt wird, hat es sich ferner als günstig erwiesen, wenn das elastische Element zum Einen an seinen Enden und zum Anderen in einem mittleren Bereich mit dem Halter in Berührung steht. Insbesondere an dem mittleren Bereich kann durch die Abstützung an dem Halter in günstiger Weise die gewünschte Klemmkraft erzeugt werden.

Für eine zuverlässige Befestigung des elastischen Elements an dem Halter hat es sich darüber hinaus als vorteilhaft herausgestellt, wenn der Halter zumindest eine Hinterschneidung zur Aufnahme eines Abschnitts des elastischen Elements aufweist.

Wenngleich der erfindungsgemäße Halter als solcher seine Vorteile entfaltet, wird bevorzugt, diesen vorbereitend an einem Gehäuse oder an einem elektrischen Gerät, insbesondere dessen Gehäuse, vorzusehen, für dessen Befestigung an einer Schiene, die vorangehend und nachfolgend geschilderten Vorteile erhalten werden können.

Für das Gehäuse oder elektrische Gerät wird ferner bevorzugt, wenn dieses zusätzlich ein Verriegelungselement zur Befestigung an der Schiene aufweist. Dementsprechend erfolgt mittels des Halters ein Einhaken an der Schiene. Nach dem Verschwenken in Richtung der Schiene erfolgt durch das Verriegelungselement eine Verriegelung. Schließlich wird im Rahmen dieser Bewegung in Richtung der Schiene das elastische Element verformt, und ein Klemmkraft erzeugt. Insgesamt kann somit für eine zuverlässige Befestigung eines Gehäuses oder elektrischen Geräts an einer Schiene gesorgt werden.

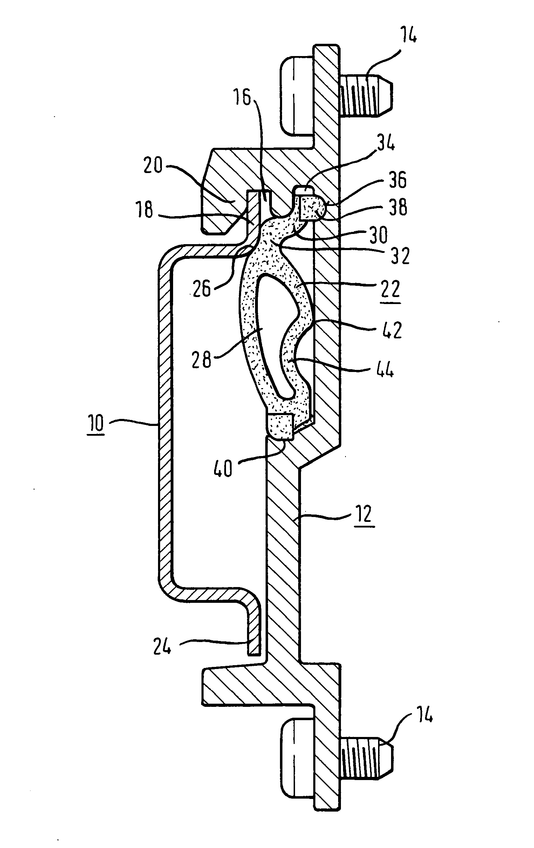

### Kurze Beschreibung der Zeichnung

Nachfolgend wird die Erfindung anhand einer beispielhaft in der Zeichnung dargestellten Ausführungsform näher erläutert.

Die Figur zeigt einen Querschnitt des erfindungsgemäßen Halters und einer Schiene.

### Ausführliche Beschreibung einer Ausführungsform der Erfindung

In der Figur ist zunächst der weitgehend hutförmige Querschnitt einer sogenannten Hutschiene 10 zu erkennen. An dieser kann ein (nicht dargestelltes) Gehäuse mittels des erfindungsgemäßen Halters 12 angebracht werden. Bei der gezeigten Ausführungsform ist der Halter 12 durch Schrauben 14 an dem Gehäuse befestigbar. Der Halter 12 weist zunächst, üblicherweise an einem oberen Ende, eine Ausnehmung 16 auf, die mit einem Vorsprung der Schiene 10 in Eingriff gebracht werden kann. Bei dem Vorsprung handelt es sich bevorzugt um den Rand der Schiene. In der Praxis ist die Schiene 10 üblicherweise fest angebracht, und ein Gehäuse mit dem daran angebrachten Halter 12 wird durch "Überstülpen" der Ausnehmung 16 über den Rand der Schiene 10 in Eingriff gebracht. Dies geschieht durch eine Bewegung derart, dass das Gehäuse sich in einer Ausrichtung befindet, die gegenüber dem in der Figur dargestellten Zustand ein wenig in einer Richtung entgegen dem Uhrzeigersinn verkippt ist. Hierdurch kann der Schenkel 18 am Rand der Schiene 10 in den Bereich zwischen dem Vorsprung 20 neben der Ausnehmung 16 des Halters und dem nachfolgend noch genauer beschriebenen elastischen Element 22 eingeführt werden. Nachfolgend wird das Gehäuse in Richtung des Uhrzeigersinns derart zu der Schiene 10 verschwenkt, dass der Halter 12 in die in der Figur gezeigte Ausrichtung kommt. Insbesondere gelangt der gemäß der Figur untere Bereich des Halters nahe zu dem unteren Randschenkel 24 der Schiene 10.

Es ist zu erwähnen, dass sowohl die Schiene als auch der Halter, als auch das Gehäuse eine gewisse Erstreckung in einer Richtung senkrecht zu der Zeichenebene der Figur aufweisen. Dementsprechend weist das Gehäuse in einem Bereich "vor" und/oder "hinter" der in der Figur dargestellten Schnittstelle ein Verriegelungselement auf, das mit dem unteren Schenkel 24 der Schiene, insbesondere dessen Rand, derart zusammenwirkt, dass das Gehäuse in der in der Figur gezeigten Ausrichtung gehalten wird. In dieser Stellung drückt der Berührungsbereich 26 der Schiene 10 auf das elastische Element 22 und verformt dieses elastisch. Diese Verformung bleibt im angebrachten Zustand aufrechterhalten und erzeugt eine Klemmkraft. Für weitere Einzelheiten des Halters, der insbesondere als Abschnitt eine Metallprofils gestaltet sein kann, der Schiene, des Gehäuses sowie dessen Verriegelungselement sei auf die DE 196 46 696 C1 sowie auf die EP 1 189 320 A2 der Anmelderin verwiesen, deren Offenbarung in dieser Hinsicht vollständig zum Gegenstand der vorliegenden Anmeldung gemacht wird.

Das erfindungsgemäß vorgesehene elastische Element 22 ist bei der gezeigten Ausführungsform folgendermaßen gestaltet. Grundsätzlich weist es, in seinem Querschnitt gesehen, zum Einen einen geschlossenen Bereich 28 und zum Anderen einen Arm 30 auf. Der geschlossene Bereich 28 ist (gemäß der in der Figur gezeigten Ausrichtung in einer Richtung von oben nach unten) länglich gestaltet. Hierbei beträgt die Länge des geschlossenen Bereichs etwa 3 bis 4 mal die Länge des Armes 30. Der Arm 30 ist an einer Stelle an den geschlossenen Bereich 28 angeschlossen, die zu der Schiene 10 gerichtet ist. Insbesondere findet an den Übergang 32 zwischen dem geschlossenen Bereich 28 und dem Arm 30 die Berührung mit dem Berührbereich 26 der Schiene 10 statt. Insgesamt weist das elastische Element 22 an der zu der Schiene 10 gerichteten Seite eine Wölbung auf, die sich über den geschlossenen Bereich 28 und teilweise den Arm 30 erstreckt.

Zur Befestigung des elastischen Elements 22 an dem Halter 12 weist letzterer zum Einen eine zweite Ausnehmung 34 und zum anderen eine Hinterschneidung 36 auf. Der Arm ist im Wesentlichen in die zweite Ausnehmung 34 eingeführt, die sich zwischen der ersten Ausnehmung 16 und dem (nicht dargestellten) Gehäuse befindet. Eine Verdickung 38, die an dem Arm 30, insbesondere an dessen Ende, vorgesehen ist, ist in die Hinterschneidung 36 eingesetzt. Hierdurch erfolgt in diesem Bereich die Befestigung des elastischen Elements an dem Halter 12. An dem entgegengesetzten Ende des elastischen Elements 22 ist eine weitere Hinterschneidung 40 ausgebildet, in die bei der gezeigten Ausführungsform das zweite Ende des elastischen Elements 22 eingesetzt ist. Das elastische Element steht nicht nur an diesen Enden mit dem Halter 12 in Berührung. Vielmehr ist ein weiterer Berührpunkt 42 in einem mittleren Bereich vorgesehen. Hier stützt sich das elastische Element 22 im Wesentlichen im Bereich des geschlossenen Bereichs 28 an dem Halter 12 ab. Hierbei kann es, wie in der Figur gezeigt, zu einer Wölbung 44 kommen, wenn sich das mittels des Halters 12 befestigte Gehäuse in der (in der Figur gezeigten) angebrachten Stellung befindet, und das elastische Element 22 dauerhaft in einer (gemäß der Figur) seitlichen Richtung verformt wird, und dementsprechend eine Klemmkraft erzeugt.

In der Figur ist ferner zu erkennen, dass das elastische Element zumindest im Bereich der Wandungen des geschlossenen Bereichs 28 sowie des Arms 30 eine gleichmäßige Wanddicke aufweist. Zusätzlich weist der geschlossene Bereich 28 in demjenigen Abschnitt, der näher zu dem Arm 30 angeordnet ist, eine größere Höhe (in der Figur in der Richtung von rechts nach links zu erkennen) auf, als an dem entgegengesetzten Ende. Schließlich erstreckt sich der Arm 30, ausgehend von dem Übergang 32 zu dem geschlossenen Bereich 28 derart von Schiene weg, dass zwischen dem Übergang 32, der den Berührungsbereich mit der Schiene 10 bildet, und dem Halter 12 ein Freiraum entsteht.

## Patentansprüche

1. Halter (12) zur Befestigung eines Gehäuses an einer Schiene (10), der an dem Gehäuse befestigbar ist und Folgendes aufweist:
- eine Ausnehmung (16), die mit einem Vorsprung (18) der Schiene (10) in Eingriff bringbar ist, und
- ein elastisches Element (22), das, im Querschnitt gesehen, zumindest einen geschlossenen Bereich (28) und zumindest einen Arm (30) aufweist.

2. Halter nach Anspruch 1, **dadurch gekennzeichnet, dass** der Arm (30) an einem Ende des elastischen Elements (22) ausgebildet ist.

3. Halter nach Anspruch 1 oder 2, **dadurch gekennzeichnet, dass** der Arm (30) mit zumindest einer zweiten, in dem Halter (12) ausgebildeten Ausnehmung (34) in Eingriff steht.

4. Halter nach einem der vorangehenden Ansprüche, **dadurch gekennzeichnet, dass** der Arm (30) zumindest eine Verdickung (38) aufweist.

5. Halter nach einem der vorangehenden Ansprüche, **dadurch gekennzeichnet, dass** sich der Arm (30) im befestigten Zustand des Gehäuses von der Schiene (10) weg erstreckt.

6. Halter nach einem der vorangehenden Ansprüche, **dadurch gekennzeichnet, dass** das elastische Element (22) im befestigten Zustand des Gehäuses im Bereich des Übergangs (32) zwischen dem geschlossenen Bereich (28) und dem Arm (30) mit der Schiene (10) in Berührung steht.

7. Halter nach einem der vorangehenden Ansprüche, **dadurch gekennzeichnet, dass** der geschlossene Bereich (28) im Querschnitt gesehen länglich ist.

8. Halter nach Anspruch 7, **dadurch gekennzeichnet, dass** der geschlossene Bereich (28) über die Länge eine veränderte Höhe aufweist.

9. Halter nach einem der vorangehenden Ansprüche, **dadurch gekennzeichnet, dass** das elastische Element (22) eine zu der Schiene (10) gerichtete Wölbung aufweist.

10. Halter nach einem der vorangehenden Ansprüche, **dadurch gekennzeichnet, dass** das elastische Element (22) an seinen Enden und in einem mittleren Bereich (42) mit dem Halter (12) in Berührung steht.

11. Halter nach einem der vorangehenden Ansprüche, **dadurch gekennzeichnet, dass** der Halter (12) zumindest eine Hinterschneidung (36, 40) zur Aufnahme eines Abschnitts des elastischen Elements (22) aufweist.

12. Gehäuse oder elektrisches Gerät mit zumindest einem Halter (12) nach einem der vorangehenden Ansprüche.

13. Gehäuse oder elektrisches Gerät nach Anspruch 12, **dadurch gekennzeichnet, dass** dieses ferner zumindest ein Verriegelungselement zur Befestigung des Gehäuses an der Schiene (10) aufweist.
